# EUROPEAN PATENT SPECIFICATION

(11) **EP 4 056 733 B1**
(45) Date of publication and mention of the grant of the patent: **30.04.2025**
(21) Application number: 22161181.7
(22) Date of filing: 09.03.2022
(51) Int. Cl.: C25B 1/02, C25B 1/23, C25B 5/00, C25B 15/08, C25B 15/04, F02M 25/12, F02B 47/10, C25B 1/04

(54) **COMBINED SYSTEM FOR THE PRODUCTION OF HYDROGEN, OXYGEN AND SEGREGATED AND SEQUESTERED CARBON DIOXIDE EQUIPPED WITH A CLOSED-CYCLE THERMAL ENGINE**
KOMBINIERTES SYSTEM ZUR ERZEUGUNG VON WASSERSTOFF, SAUERSTOFF UND ABGETRENNTEM UND ABGESCHIEDENEM KOHLENDIOXID, AUSGESTATTET MIT EINER WÄRMEKRAFTMASCHINE MIT GESCHLOSSENEM KREISLAUF
SYSTÈME COMBINÉ DE PRODUCTION D'HYDROGÈNE, D'OXYGÈNE ET DE DIOXYDE DE CARBONE SÉPARÉ ET SÉQUESTRÉ, ÉQUIPÉ D'UN MOTEUR THERMIQUE À CYCLE FERMÉ

(30) Priority: 09.03.2021 IT 202100005471
(43) Date of publication of application: 14.09.2022
(73) Proprietor: S.A.T.E. - Systems and Advanced Technologies Engineering S.R.L., 30100 Venezia (IT)
(72) Inventor: BRIGHENTI, Attilio, 30135 VENEZIA (VE) (IT)
(74) Representative: Studio Torta S.p.A.

(56) References cited:
- EP-A1- 3 617 347
- WO-A1-2016/162522
- WO-A2-2012/062529
- GB-A- 2 456 169
- US-A- 4 112 875
- US-A1- 2020 208 274

## Description

### TECHNOLOGY SECTOR

The present invention relates to a combined system for the production of hydrogen, oxygen and segregated and sequestered carbon dioxide equipped with a closed-cycle thermal engine (i.e. which does not exchange gases with the external environment).

### PRIOR ART

It is well known that one of the most limiting problems in the efficient use of energy converted from primary renewable energy sources, such as wind, tides, currents or solar, is the time lag between the availability of these sources and the demand for energy. This problem forces, during peaks in demand, the use of peak energy generators with fast start-up times, typically consisting of power generating sets with spark ignition engines or gas turbines (which of course generate carbon dioxide in the exhaust which is dispersed into the atmosphere); in addition, this problem forces the use of energy storage systems during peaks of excess energy availability compared to demand, such as hydroelectric pumping plants (only possible in countries with suitable orographic characteristics) or electric accumulators, which are however a very expensive solution.

The development of sustainable industry in both developed and less developed or emerging countries requires technologies and technical solutions to limit and reverse climate change, which is mainly induced by the increasing concentration of *greenhouse* gases (including carbon dioxide) in the atmosphere. This objective requires effective methods to reduce carbon dioxide emissions into the environment, including through *capture,* i.e. its separation from the atmosphere, and its containment, also known as sequestration or storage, either permanently in the gaseous phase (e.g. in depleted hydrocarbon deposits) or in the solid phase (e.g. in carbonate-based construction materials). Of course, carbon dioxide also has industrial uses for which it is specifically produced, which could be limited through a more integrated cycle of its use in order to limit its cumulative release into the atmosphere.

The capture of carbon dioxide from the atmospheric mixture, in which it appears in any case in a low molar percentage (390 ppm), requires high energy and large exchange surfaces, for example with molecular sieves or semipermeable membranes. Being able to intercept and separate this combustion product at the source (i.e. extracting it from a mixture in which it prevails as a concentration) has the advantage of limiting the energy spent to separate the unit of carbon dioxide produced by combustion.

At the same time, a more flexible use of renewable energies can be achieved by transforming the electrical energy they produce, for the part that cannot be immediately absorbed and used through the distribution network, into chemical energy, by breaking the bond between hydrogen and oxygen in the water molecule through the well-known process of electrolysis, which produces the two substances, separated, in a gaseous state. Of the two gases, however, the true energy *'carrier'* is hydrogen, which is not found free in nature, while oxygen is a valuable gas, as it is obtained pure by this process, only if it is intended for uses in which it is required as such, particularly in the iron and steel industry for the production of steel. Otherwise, e.g. to feed combustion, it is already available in the atmosphere and for such a use must normally be diluted anyway to limit combustion temperatures. In other words, to power vehicles propelled by hydrogen-powered fuel cells, it is neither necessary nor convenient (except in manned submarine vehicles) to store pure oxygen, as these fuel cells can directly exploit the oxygen in the air in an open-cycle system (i.e. a system that exchanges gas with the external environment).

Extensive use of electrolysis, as a method of efficient hydrogen production with no or limited carbon dioxide production, is closely linked to the use of oxygen, as well as the sending of hydrogen into pipelines or hydrogen storage tanks and cylinders.

Patent EP2759691B1 describes a power conversion system for storing energy through a hydrogenation reaction of an aromatic hydrocarbon, wherein an internal combustion engine of the compression ignition type is used as the heat source in the hydrogenation reaction. This conversion system uses only the heat released by the internal combustion engine to promote the hydrogenation reaction of the aromatic hydrocarbon and thereby absorb the hydrogen produced by an electrolytic process; in addition, in this conversion system the internal combustion engine emits carbon dioxide into the atmosphere.

Patent application US20208274A1 describes an energy conversion device for converting electrical energy into chemical energy. The device includes: an electrolysis device that can be connected to an electrical grid and is designed to separate water into hydrogen and oxygen using electrical energy; a fuel synthesis device that is connected to the electrolysis device to be supplied with hydrogen as a reactant to synthesize a fuel from hydrogen and carbon dioxide; and an internal combustion engine that is connected to the electrolysis device to receive oxygen generated in the electrolysis device.

Patent application US4112875A describes an internal combustion engine that is powered by hydrogen-oxygen and uses an inert gas, such as argon, as a working fluid to increase engine efficiency, eliminate pollution and facilitate the operation of a closed-loop energy system.

Patent application WO2012062529A2 describes a plant for generating methanol and supplying heat and/or electricity, and a water electrolysis plant that can be powered by electricity and water and is designed to produce hydrogen and oxygen gas.

Patent application EP3617347A1 describes the production of hydrogen and/or electricity.

Patent application GB2456169A describes an energy storage system comprising: a primary electrical energy source, an electrolysis unit for the production of hydrogen and oxygen, a hydrocarbon reactor for the production of hydrocarbons and water, and a secondary electrical energy generator for the production of secondary electrical energy and carbon monoxide.

Patent application WO2014108732A1 describes a power generation system comprising a rotating electric generator with permanent magnets, an electrolyser that produces oxygen and hydrogen from electricity and water, and a thermal engine that drives the electric generator.

Patent application WO2016162522A1 describes a method and apparatus for generating oxygen by decomposing water via electrolysis into oxygen and hydrogen fractions; the hydrogen may be combusted with air, and the resulting water may be recycled for subsequent electrolysis.

### DESCRIPTION OF THE INVENTION

The aim of the present invention is to propose a combined system for the production of hydrogen, oxygen and segregated and sequestered carbon dioxide equipped with a closed-cycle thermal engine, which combined system allows maximising energy efficiency (i.e. minimising energy consumption for hydrogen production) while finding an immediate useful use for the oxygen and avoiding the release of carbon dioxide into the atmosphere.

According to the present invention, a combined system for the production of hydrogen, oxygen and segregated and sequestered carbon dioxide is provided which is equipped with a closed-cycle thermal engine according to the appended claims.

The claims illustrate a preferred embodiment of the present invention forming part of this description.

### BRIEF DESCRIPTION OF THE DRAWINGS

The present invention will now be described with reference to the accompanying drawings, which illustrate certain non-limiting examples of implementation, wherein:
- Figure 1 is a schematic view of a combined system, made in accordance with the present invention, for the production of hydrogen, oxygen and segregated a sequestered carbon dioxide equipped with a closed-cycle thermal engine;
- Figure 2 is a schematic view of a power generation plant of the combined system of Figure 1 based on a closed-cycle thermal engine with carbon dioxide liquefaction by compression and air cooling; and
- Figure 3 is a schematic view of a power generation plant of the combined system in Figure 1 based on a closed-cycle thermal engine with carbon dioxide liquefaction by compression and water cooling.

### PREFERRED FORMS OF IMPLEMENTATION OF THE INVENTION

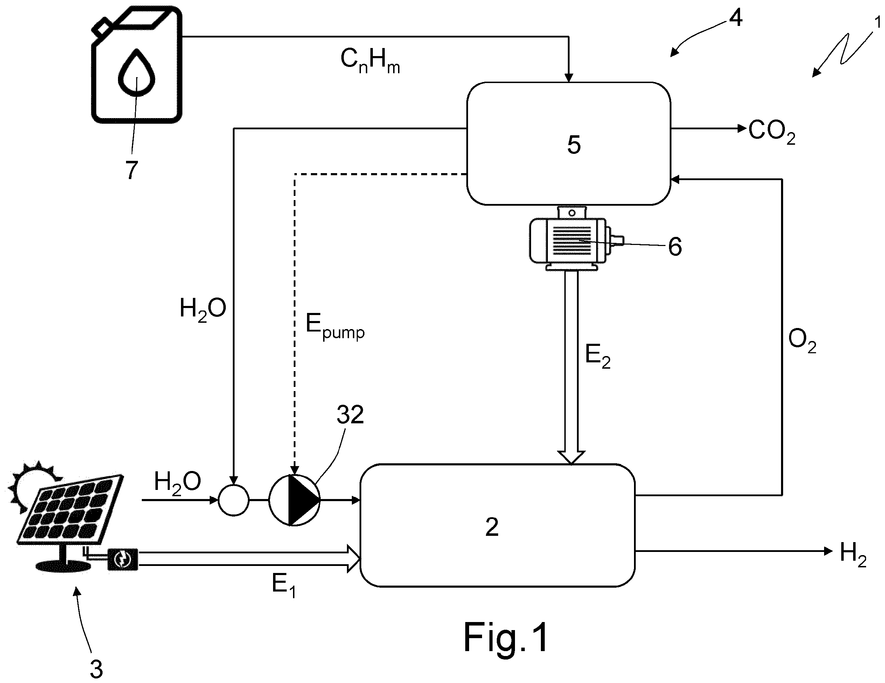

In figure 1, a combined system for the production of hydrogen, oxygen and segregated and sequestered carbon dioxide is shown as a whole.

Combined system 1 carries out an electrolysis process in an electrolysis plant 2 of known type. The electrolysis plant 2 receives as an input water (indicated by the chemical formula H₂O) and electrical energy (from two different sources and indicated by E₁ and E₂) and outputs hydrogen and oxygen in gaseous form (indicated by the respective chemical formulae H₂ and O₂). Non-exhaustive examples of high-pressure water electrolysers are described in patent documents US20100089747A1, US9255333B2, and US7226529B2, in which the electrical energy supplied is converted into the chemical and pneumatic energy of the two gases, either both or only one of which, most conveniently hydrogen, under pressure.

According to a preferred form of implementation, the electrolysis plant 2 is connected to an electricity generation plant 3 using renewable sources of energy (such as wind or solar) and is also connected to an electricity generation plant 4 equipped with a closed cycle thermal engine 5 (i.e. not exchanging gas with the external environment), preferably but not exclusively of the self-ignition or compression ignition or Diesel cycle type (i.e. it is a reciprocating piston engine). Alternatively, the thermal engine 5 could be a turbine engine. According to a different form of implementation not illustrated, the electrical energy could be exclusively provided by the electricity generation plant 4, i.e. without the contribution of renewable sources (and in this case the thermal engine 5 of the electricity generation plant 4 could operate by an only partially closed cycle); alternatively the electricity generation plant 3 using renewable sources could be replaced by the normal electrical network.

In the plant 4 for the generation of electric energy, there is an electrical generator 6 which is brought into rotation by the thermal engine 5; in turn, the thermal engine 5 is fed by a liquid or gaseous fuel 7 consisting of hydrocarbons or derivatives (and indicated with the generic chemical formula CₙHₘ), for example natural gas or biofuels obtained from biological processes or waste treatment. As mentioned above, the thermal engine 5 operates in closed cycle and therefore does not exchange gases with the external environment (i.e. it does not intake fresh air from the atmosphere and does not exhaust carbon dioxide and other gases into the atmosphere). In particular, in the thermal engine 5 the exhaust gases generated by the thermal engine 5 are recycled at the intake after having extracted the aqueous fraction produced by combustion (i.e. after having dehumidified the exhaust gases through condensation of water vapour, at room temperature), so that the carbon dioxide contained in the exhaust gases is sequestered immediately downstream of the thermal engine 5 due to its high concentration.

The concentration of carbon dioxide in the exhaust gases of the thermal engine 5 is maintained at a high level both as a result of the initial gas charge and as a consequence of the total recirculation of the dehumidified exhaust gases at the intake, after their comburent power has been restored by injecting the oxygen produced during the electrolysis, which is added to the residual oxygen in the combustion products, the latter being dependent on the excess of comburent in relation to the stoichiometric mass of combustion.

The production of hydrogen by the combined system 1 is ultimately a way of storing and transporting energy remotely, for its distribution and use both for power generation, as a fuel, and as a process gas. Hydrogen is produced by means of a flexible process, in which the share of energy sent to the electrolysis plant 2 can be modulated according to the availability of the primary renewable source (solar or wind) of the electricity generation plant 3 and of the fuel source (the fuel 7) of the electricity generation plant 4, while on average respecting the proportions of the products of the respective reactions, which in turn also depend on the atomic carbon/hydrogen ratio in the fuel 7 feeding the thermal engine 5 and on the efficiencies of the electricity generation plants 3 and 4.

The chemical reaction occurring in the electrolysis plant 2 (balanced stoichiometrically with respect to the chemical reaction occurring in the thermal engine 5) is as follows:

(2n + m/2)H₂O + E₁ + E₂ -> (2n + m/2)H₂ + (n + m/4)O₂

The chemical reaction occurring in the thermal engine 5 (balanced stoichiometrically with respect to the chemical reaction occurring in the electrolysis plant 2) is as follows:

CₙHₘ + (n + m/4)O₂ -> (m/2)H₂O + (n)CO₂ + E₁

The electrolysis plant 2 is of a known type and preferably (but not necessarily) is of the polymer membrane type (so-called *"PEM"*), which has the advantage of allowing the production of hydrogen at high pressure starting from water pumped at the pressure of the electrolysis process, therefore with much less energy expenditure than that possibly required for the compression of permeated hydrogen from atmospheric pressure to the high pressure of storage and transport, for example in cylinders, typically between 200 and 300 bar.

The thermal engine 5 is preferably of positive displacement and compression ignition type; however, it is also possible to use positive displacement and spark ignition engines or gas turbines, the latter especially for high power.

The plant 4 for generating electric energy provides for an extraction of the carbon dioxide produced by the combustion in the thermal engine 5 and also provides for the recovery of the incondensable fraction of the exhaust gases of the thermal engine 5, consisting practically only of oxygen exceeding the stoichiometric quantity. The closed cycle of the thermal engine 5 can preferably be realized according to one of the solutions known from the state of the art of closed cycle engines (for example as described in patent application GB1513958).

Closed-cycle thermal engines, in particular using compression-ignition, have already been studied, developed and applied for the propulsion of manned and unmanned submarines, in so-called "air *independent"* long endurance missions underwater. Among the various systems that allow the recirculation of exhaust gases to the intake, after separation of excess combustion gases produced by combustion, the technology of particular interest for the present application is the one that provides for partial compression of the exhaust gases and liquefaction of carbon dioxide (as described in patent application GB1513958). For particularly long missions, such as those required for autonomous underwater vehicles (AUVs), an improvement of the system described in patent application GB1513958 has also been devised, whereby liquid oxygen and/or liquefied natural gas are used as reactants, in which the liquefaction of carbon dioxide takes place at a lower pressure and temperature, and thus with less energy consumption for compression, due to the cooling achieved by the evaporation of the liquefied oxygen and/or natural gas during engine operation (as described in patent US4891939A1).

As regards the closed-cycle operation of a thermal engine, it is known that the reduction in thermodynamic efficiency resulting from the prevalence of a triatomic gas (with a lower ratio γ = cp/cv, i.e. with a lower adiabatic expansion coefficient or adiabatic index commonly denoted by the letter γ) can be compensated for by increasing the volumetric compression ratio of the reciprocating engine or by adding a monoatomic gas (typically Argon) in suitable proportions to the initial charge of the inert gases recycled in the engine; while the first solution can be applied independently of the process for managing the carbon dioxide produced by the thermal engine, the second solution is only conveniently applicable if the thermal engine also includes a process for liquefying the carbon dioxide, in order to avoid the need for further storage of the monoatomic gas and its costly dispersal in the environment.

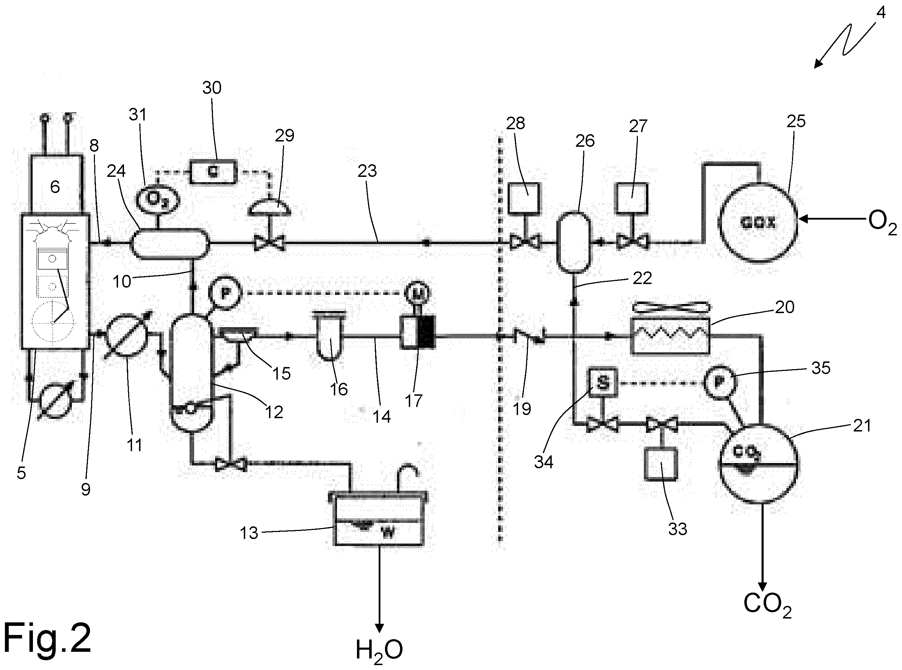

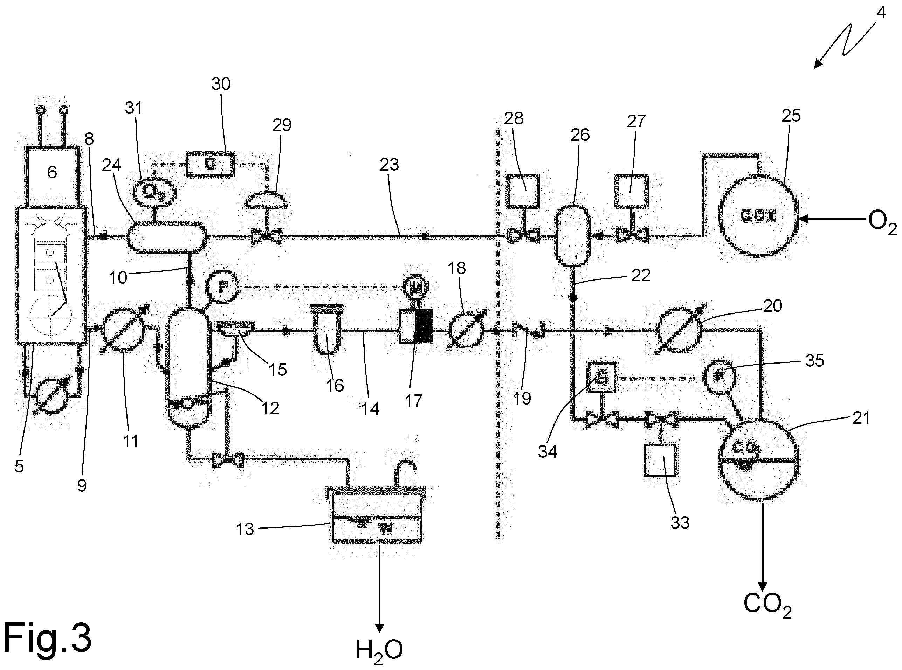

According to what is illustrated in Figures 2 and 3 (which differ only for the different cooling method used in the carbon dioxide liquefaction process), the thermal engine 5 includes an intake duct 8 through which the cycle gas containing inert gas is fed to the combustion chambers (for example, obtained in cylinders inside which pistons slide), said cycle gas consisting of carbon dioxide, preferably pure or mixed with inert monoatomic or diatomic gases which do not participate in the combustion but limit the temperature to values compatible with the materials constituting the combustion chamber, and a sufficient quantity of oxygen (i.e. comburent) to feed the combustion reaction. The thermal engine 5 includes an exhaust duct 9 through which the combustion chambers eject the exhaust gases generated by the combustion. The thermal engine 5 includes a recirculation duct 10 connecting the exhaust duct 9 to the intake duct 8 so that the exhaust gases are recirculated through the intake duct 8 back to the combustion chambers.

A heat exchanger 11 cooled by a refrigerant (e.g. air or water at substantially ambient temperature) is arranged along the exhaust duct 9 to cool the exhaust gases coming from the combustion chambers to a temperature low enough to condense and thus separate the water vapour produced by combustion.

Preferably, the exhaust gases are cooled while maintained at atmospheric pressure or at a pressure value above atmospheric, which latter allows subsequent turbocharging of the engine without the need for turbochargers when the cooled exhaust gases are recirculated in the intake duct 8 through the recirculation duct 10.

A separator 12 is arranged along the exhaust duct 9 and downstream of the heat exchanger 11, which separates from the exhaust gases the water that has been produced by combustion and has been condensed in the heat exchanger 11; in particular, the exhaust duct 9 terminates in the separator 12. The water separated by the separator 12 is fed to a tank 13 from which the water is taken to feed the electrolysis plant.

Obviously, in order to maintain a constant working pressure in the exhaust duct 9, in the recirculation duct 10, and in the intake duct 8, it is necessary to continuously or cyclically remove a part of the exhaust gases, which therefore are not fully recirculated; consequently, along the exhaust duct 9 there is also arranged an extraction duct 14, which takes out (pushes out) from the exhaust duct 9 a part of the exhaust gases, removing them from the recirculation duct 10. In particular, the extraction duct 14 originates from the separator 12 which forms the end of the exhaust duct 9. Preferably, the recirculation duct 10 originates from the separator 12 and the extraction duct 14 originates from the separator 12 upstream of the recirculation duct 10. A dehumidifier filter 15 is arranged along the extraction duct 14, which retains the residual water and steam entrained in the exhaust gases and sends them to the separator 12, and a dehydrating filter 16 is also arranged downstream of the dehumidifier filter 15.

A compressor 17 is arranged along the extraction duct 14 and downstream of the filters 15 and 16, which is driven directly by the thermal engine 5 or is driven by a dedicated electric motor and is designed to compress the excess exhaust gas (i.e. flowing along the extraction duct 14). The flow rate of the compressor 17 is regulated by means of a pressure sensor (i.e. a pressure controller) located in the condensed water separator 12 in such a way that the pressure in the separator 12 is always equal to a desired value within assigned tolerances with respect to the reference value. In particular, it is provided a control unit configured to regulate the flow of the compressor 17 according to the pressure measured in the separator 12 and in such a way that the pressure measured in the separator 12 is always equal to a desired value.

A heat exchanger 18 (present in the embodiment illustrated in figure 3 and not present in the embodiment illustrated in figure 2) may also be arranged along the extraction duct 14 and downstream of the compressor 17, which cools (desuperheats) the dehumidified and compressed exhaust gases of the compressor 17; that is, the heat exchanger 18 removes from the dehumidified and compressed exhaust gases the heat absorbed during compression in the compressor 17.

A non-return valve 19 (i.e. a one-way valve 19) is arranged along the extraction duct 14 and downstream of the heat exchanger 18 (or downstream of the compressor 17 if the heat exchanger 18 is not present), which only allows an exhaust gas flow away from the compressor 17.

Along the extraction duct 14 and downstream of the non-return valve 19 there is a first heat exchanger 20 (which uses as a refrigerant for cooling either air in the actuation form illustrated in figure 2 or water in the actuation form illustrated in figure 3) which condenses the carbon dioxide; in fact, the refrigerant (air or water) is made to enter the heat exchanger 20 in counterflow with respect to the compressed exhaust gases and above all at a temperature lower than the dew point of the exhaust gases; in this context it is important to note that the exhaust gases are composed of a mixture of carbon dioxide and other non-condensable gases (residual oxygen and any inert gases other than carbon dioxide, for example preferably a monoatomic gas, Argon, introduced specifically and as explained above to maintain the γ ratio close to the γ ratio of atmospheric air).

The efficiency of the carbon dioxide liquefaction system depends on the temperature of the refrigerant used in the heat exchanger. In cold climates, the outside air temperature below 0°C may allow carbon dioxide to be liquefied at relatively low pressure, thereby resulting in a modest compression power of the excess exhaust gases (i.e., a modest power input to compressor 17), relative to the power generated by the thermal engine 5. Furthermore, if methane stored in a liquid state (LNG) is used as fuel for the thermal engine 5, the carbon dioxide liquefaction system can be even more efficiently achieved by using the evaporation of the liquid methane to condense the carbon dioxide at a very low temperature, between -45 and -35 °C, as also described in patent US4891939A1.

Finally, the extraction duct 14 ends in a first separator 21, i.e. the separator 21 is arranged along the extraction duct 14 downstream of the heat exchanger 20; in the separator 21 the liquefied carbon dioxide is separated from the non-condensable gases present in the exhaust gas and then the liquefied (and therefore segregated) carbon dioxide is sent to an external tank (not illustrated). The non-condensable gases resulting from the separation of the liquefied carbon dioxide from the exhaust gas are sent to a recovery duct 22.

The electricity generation plant 4 comprises a feed duct 23 which feeds almost pure oxygen and terminates (i.e. flows into) a mixing device 24 in which the recirculation duct 10 also terminates (i.e. flows into). The mixing device 24 mixes together the nearly pure oxygen fed by the feed duct 23 with the oxygen-poor exhaust gases fed by the recirculation duct 10 (and originating from the separator 12) to obtain a new mixture having a quantity of oxygen sufficient for combustion in the combustion chambers of the thermal engine 5, said quantity of oxygen also possibly differing from the fraction of oxygen present in the atmospheric air, in relation to the total mass of the engine feed gas.

The feed duct 23 starts from a storage vessel 25 in which pure oxygen produced by electrolysis is stored for reoxygenation of the recirculated exhaust gases from the recirculation duct 10. A mixing device 26 is arranged along the feed duct 23, in which the pure oxygen from storage vessel 25 is mixed with the oxygen-rich recirculated noncondensable gases fed from the recovery duct 22 and from the separator 21; therefore, downstream of the mixing device 26 flows nearly pure oxygen (i.e. a mixture in which oxygen is by far the predominant component). Two isolation (shutoff) valves 27 and 28 are arranged along the feed duct 23 and upstream and downstream of the mixing device 26; they are opened during operation to allow respectively the inflow of pure oxygen to the mixing device 26 and the inflow of almost pure oxygen to the mixing device 24; i.e. the two isolation valves 27 and 28 are "ON/OFF" valves which can assume only two positions (fully open or fully closed).

A regulating valve 29 is arranged along the feed duct 23 and upstream of the mixing device 24, which is controlled by a control unit 30 according to the signal provided by an oxygen concentration measuring sensor 31 coupled to the mixing device 24.

Along the duct 22 for recovering oxygen and any other non-condensable inert gases from the separator 21, an isolation valve 33 (which can only assume a fully open position or a fully closed position) and a regulating valve 34 are arranged in series. The regulating valve 34 is used (controlled) to regulate the pressure in the separator 21 of the liquefied carbon dioxide; this pressure, in fact, increases as residual oxygen and non-condensable inert gases accumulate in the separator 21 and must be regulated to remain equal to a desired and predetermined value. Keeping the pressure in the separator 21 relatively low makes it possible to limit the compression ratio and the power required by the compressor 17 to bring the mixture extracted from the separator 12 to a pressure sufficiently high to cause the liquefaction of the carbon dioxide.

The recovery of oxygen and any other inert, non-condensable gases (for example Argon or Nitrogen) along the recovery duct 22 allows the pressure in the liquefied carbon dioxide separator 21 to be reduced as the more oxygen and non-condensable gases are allowed to flow along the recovery duct 22, due to the pressure difference between the carbon dioxide separator 21 and the mixing device 24, the more the pressure in the separator 21 is reduced, tending the pressure in the separator 21 to approach the carbon dioxide saturation pressure. Accordingly, the opening of the regulating valve 34 (i.e., the flow of oxygen through the regulating valve 34) is controlled by means of a pressure sensor 35 (i.e., a pressure controller) located in the liquefied carbon dioxide separator 21 such that the pressure in the separator 21 is always equal to a desired value within assigned tolerances from the reference value. In particular, the pressure sensor 35 is designed to measure a pressure in the first separator (21), the regulating valve 34 is located along the recovery duct 22, and it is provided a control unit configured to drive the regulating valve 34 according to the pressure measured by the pressure sensor 35 and in such a way that the pressure measured by the pressure sensor 35 is always equal to a desired value. The regulating valve 34 may be continuously position-regulated (analogous to the regulating valve 29 and thus may be arranged in a series of intermediate positions between a fully open position and a fully closed position) or may be two-positioned (thus may assume only a fully open position or a fully closed position, i.e., "ON/OFF"), depending on the desired accuracy of pressure regulation in the separator 21.

In accordance with Figure 1, the combined system 1 comprises a pump 32 which supplies pressurised water to the electrolysis plant 2 and is driven directly by the thermal engine 5; alternatively, the pump 32 is driven by a dedicated electric motor.

The forms of implementation described here can be combined without going beyond the scope of protection of this innovation.

The combined system 1 described above has many advantages.

In the combined system 1 described above, the oxygen required for combustion is obtained from electrolysis as a high-value by-product of hydrogen production and is immediately used in the combined system 1, which therefore has a maximised and integrated utilisation. Otherwise, the oxygen would have to be channelled for use either in cylinders or in pipelines (unless more complex integration of other processes requiring pure oxygen is possible).

Thus, the combined system 1 described above renders more flexible the use of renewable primary energies by producing hydrogen through an electrolysis process, known from the technique, effectively combined with a power generation system consisting of the thermal engine 5 which fully utilises the oxygen produced by the electrolysis and produces in an already sequestered form the carbon dioxide resulting from the combustion of the fuel 7 used.

Considering the stoichiometric ratios in the chemical reactions involved and the efficiencies of the internal combustion thermal engine 5, the power generation, the electrolyser and the pumps and compressors forming part of the combined system 1 it can be stated that more than one fifth of the electrical energy required for the electrolytic process can be supplied by the thermal engine 5 using the oxygen produced, while all the carbon dioxide produced by combustion is condensed and made available in a pure state for stable and permanent sequestration or for industrial uses.

It is important to note that hydrogen can be produced by reforming with water vapour from methane or other hydrocarbons, producing carbon dioxide which, however, is diluted with other gases in the reaction products, both intermediate and final; this reforming process is still the most economical of all possible processes.

However, the sequestration of carbon dioxide, although also possible with the reforming process, is energy-intensive and costly. The cost of electrolysers (used in the combined system described above) has the real possibility of allowing hydrogen production at prices competitive with those of the reforming process, while at the same time avoiding the production of large quantities of carbon dioxide, essentially to the extent of one mole of carbon dioxide for every mole of methane converted.

### LIST OF FIGURE REFERENCE NUMBERS

- 1: combined system
- 2: electrolysis plant
- 3: electricity generation plant
- 4: electricity generation plant
- 5: thermal engine
- 6: electrical generator
- 7: fuel
- 8: intake duct
- 9: exhaust duct
- 10: recirculation duct
- 11: second heat exchanger
- 12: second separator
- 13: tank
- 14: extraction duct
- 15: dehumidifier filter
- 16: dehydrating filter
- 17: compressor
- 18: heat exchanger
- 19: non-return valve
- 20: first heat exchanger
- 21: first separator
- 22: recovery duct
- 23: feed duct
- 24: mixing device
- 25: storage vessel
- 26: mixing device
- 27: isolation valve
- 28: isolation valve
- 29: regulating valve
- 30: control unit
- 31: measuring sensor
- 32: pump
- 33: isolation valve
- 34: regulating valve
- 35: pressure sensor

## Claims

1. Combined system (1) for the production of hydrogen, oxygen and segregated and sequestered carbon dioxide; the combined system (1) comprises:
an electrolysis plant (2) configured to receive water and electrical energy (E₁, E₂) as an input and supply hydrogen and oxygen in gaseous form as an output;
an electricity generation plant (4) which is equipped with an electrical generator (6) that generates at least part of the electrical energy (E₂) used by the electrolysis plant (2) and a thermal engine (5) that drives the electrical generator (6) and comprises: an intake duct (8); an exhaust duct (9); and a recirculation duct (10) connecting the exhaust duct (9) to the intake duct (8) to recirculate the exhaust gases produced by the combustion;
a feed duct (23) that sends the oxygen generated by the electrolysis plant (2) to the intake duct (8) of the thermal engine (5); and
an extraction duct (14) configured to draw a portion of the exhaust gases from the exhaust duct (9) of the thermal engine (5) by withdrawing them from the recirculation duct (10);
the combined system (1) is **characterised by the fact that it** comprises:
a first heat exchanger (20) which is arranged along the extraction duct (14) and is configured to cool the exhaust gases to a temperature below a dew point of the gaseous mixture in order to condense the carbon dioxide;
a first separator (21) which is arranged along the extraction duct (14) downstream of the first heat exchanger (20) and is configured to separate liquefied carbon dioxide from the non-condensable gases in the exhaust gases; and
a recovery duct (22) connecting the first separator (21) to the feed duct (23) in order to introduce into the feed duct (23) the non-condensable gases present in the exhaust gas and extracted from the first separator (21).

2. A combined system (1) according to claim 1 and comprising a first mixing device (24) from which the intake duct (8) originates and configured to mix the oxygen conveyed by the feed duct (23) with the exhaust gases conveyed by the recirculation duct (10).

3. A combined system (1) according to claim 2 and comprising:
a regulating valve (29) located along the feed duct (23) and upstream of the first mixing device (24);
an oxygen concentration measuring sensor (31) coupled to the mixing device (24); and
a first control unit (30) which controls the regulating valve (29) according to the signal provided by the measuring sensor (31).

4. A combined system (1) according to any one of claims 1 to 3 and comprising:
a second heat exchanger (11) which is arranged along the exhaust duct (9) and is configured to cool the exhaust gases to a temperature low enough to condense the water produced by the combustion; and
a second separator (12) which is arranged along the exhaust duct (9) downstream of the second heat exchanger (11), and is configured to separate the water condensed in the second heat exchanger (11) from the exhaust gases.

5. Combined system (1) according to claim 4, wherein the extraction duct (14) originates from the second separator (12).

6. Combined system (1) according to claim 4 or 5 and comprising a compressor (17) which is arranged along the extraction duct (14) and is configured to compress the exhaust gases flowing along the extraction duct (14).

7. A combined system (1) according to claim 6 and comprising:
a pressure sensor configured to measure a pressure in the second separator (12); and
a second control unit configured to regulate a flow of the compressor (17) according to the pressure measured in the second separator (12) and in such a way that the pressure measured in the second separator (12) is always equal to a desired value.

8. A combined system (1) according to any one of claims 1 to 7 and comprising a second mixing device (26) which is arranged along the feed duct (23) and is configured to mix pure oxygen coming from the electrolysis plant (2) with the non-condensable gases conveyed by the recovery duct (22).

9. A combined system (1) according to claim 8 and comprising:
a first isolation valve (27) for pure oxygen which is located along the feed duct (23) upstream of the second mixing device (26); and
a second isolation valve (28) which is located along the feed duct (23) downstream of the second mixing device (26).

10. A combined system (1) according to any one of claims 1 to 9 and comprising:
a pressure sensor (35) to measure a pressure in the first separator (21);
a regulating valve (34) located along the recovery duct (22); and
a third control unit configured to drive the regulating valve (34) according to the pressure measured by the pressure sensor (35) and in such a way that the pressure measured by the pressure sensor (35) is always equal to a desired value.

11. A combined system (1) according to any one of claims 1 to 10 and comprising a storage vessel (25) in which pure oxygen produced by electrolysis is stored and intended for re-oxygenating the exhaust gases recirculated by the recirculation duct (10) and from which the feed duct (23) originates.

12. Combined system (1) according to any one of claims 1 to 11, wherein the thermal engine (5) is a turbine engine.

13. Combined system (1) according to any one of claims 1 to 11, wherein the thermal engine (5) is a reciprocating piston engine operating according to the Diesel cycle.

## Patentansprüche

1. Kombiniertes System (1) für die Produktion von Wasserstoff, Sauerstoff und abgetrenntem und abgeschiedenem Kohlendioxid; das kombinierte System (1) umfasst:
eine Elektrolyseanlage (2), die so konfiguriert ist, dass sie Wasser und elektrische Energie (E₁, E₂) als Eingang erhält und Wasserstoff und Sauerstoff in gasförmiger Form als Ausgang liefert;
eine Stromerzeugungsanlage (4), die mit einem elektrischen Generator (6), der zumindest einen Teil der von der Elektrolyseanlage (2) verwendeten elektrischen Energie (E₂) erzeugt, und einer Wärmekraftmaschine (5), die den elektrischen Generator (6) antreibt, ausgestattet ist und umfasst:
eine Einlassleitung (8); eine Auslassleitung (9); und
eine Rückführungsleitung (10), die die Auslassleitung (9) mit der Einlassleitung (8) verbindet, um die durch die Verbrennung produzierten Abgase zurückzuführen;
eine Zuführungsleitung (23), die den von der Elektrolyseanlage (2) erzeugten Sauerstoff in die Einlassleitung (8) der Wärmekraftmaschine (5) leitet; und
eine Absaugleitung (14), die so konfiguriert ist, dass sie einen Teil der Abgase aus der Auslassleitung (9) der Wärmekraftmaschine (5) absaugt, indem sie sie aus der Rückführungsleitung (10) abzieht;
das kombinierte System (1) ist **dadurch gekennzeichnet, dass es** umfasst:
einen ersten Wärmetauscher (20), der entlang der Absaugleitung (14) angeordnet und so konfiguriert ist, dass er die Abgase auf eine Temperatur unterhalb eines Taupunkts des Gasgemischs kühlt, um das Kohlendioxid zu kondensieren;
einen ersten Abscheider (21), der entlang der Absaugleitung (14) stromabwärts des ersten Wärmetauschers (20) angeordnet und so konfiguriert ist, dass er verflüssigtes Kohlendioxid von den nicht kondensierbaren Gasen in den Abgasen abtrennt; und
eine Rückgewinnungsleitung (22), die den ersten Abscheider mit der Zuführungsleitung (23) verbindet, um die im Abgas vorhandenen und aus dem ersten Abscheider (21) abgesaugten nicht kondensierbaren Gase in die Zuführungsleitung (23) einzuleiten.

2. Kombiniertes System (1) nach Anspruch 1 und umfassend eine erste Mischvorrichtung (24), von der die Einlassleitung (8) ausgeht und die so konfiguriert ist, dass sie den durch die Zuführungsleitung (23) beförderten Sauerstoff mit den durch die Rückführungsleitung (10) beförderten Abgasen mischt.

3. Kombiniertes System (1) nach Anspruch 2 und umfassend:
ein Regelventil (29), das entlang der Zuführungsleitung (23) und stromaufwärts der ersten Mischvorrichtung (24) angeordnet ist;
einen Sauerstoffkonzentrationsmesssensor (31), der mit der Mischvorrichtung (24) gekoppelt ist; und
eine erste Steuereinheit (30), die das Regelventil (29) nach dem vom Messsensor (31) gelieferten Signal steuert.

4. Kombiniertes System (1) nach einem der Ansprüche 1 bis 3 und umfassend:
einen zweiten Wärmetauscher (11), der entlang der Auslassleitung (9) angeordnet ist und so konfiguriert ist, dass er die Abgase auf eine Temperatur kühlt, die niedrig genug ist, um das durch die Verbrennung produzierte Wasser zu kondensieren; und
einen zweiten Abscheider (12), der entlang der Auslassleitung (9) stromabwärts des zweiten Wärmetauschers (11) angeordnet und so konfiguriert ist, dass er das in dem zweiten Wärmetauscher (11) kondensierte Wasser von den Abgasen trennt.

5. Kombiniertes System (1) nach Anspruch 4, wobei die Absaugleitung (14) von dem zweiten Abscheider (12) ausgeht.

6. Kombiniertes System (1) nach Anspruch 4 oder 5 und umfassend einen Verdichter (17), der entlang der Absaugleitung (14) angeordnet und so konfiguriert ist, dass er die entlang der Absaugleitung (14) strömenden Abgase verdichtet.

7. Kombiniertes System (1) nach Anspruch 6 und umfassend:
einen Drucksensor, der so konfiguriert ist, dass er einen Druck im zweiten Abscheider (12) misst; und
eine zweite Steuereinheit, die so konfiguriert ist, dass sie einen Strom des Verdichters (17) nach dem in dem zweiten Abscheider (12) gemessenen Druck regelt, und zwar so, dass der in dem zweiten Abscheider (12) gemessene Druck immer gleich einem gewünschten Wert ist.

8. Kombiniertes System (1) nach einem der Ansprüche 1 bis 7 und umfassend eine zweite Mischvorrichtung (26), die entlang der Zuführungsleitung (23) angeordnet und so konfiguriert ist, dass sie reinen Sauerstoff, der von der Elektrolyseanlage (2) kommt, mit den nicht kondensierbaren Gasen mischt, die durch die Rückgewinnungsleitung (22) befördert werden.

9. Kombiniertes System (1) nach Anspruch 8 und umfassend:
ein erstes Absperrventil (27) für reinen Sauerstoff, das entlang der Zuführungsleitung (23) stromaufwärts der zweiten Mischvorrichtung (26) angeordnet ist; und
ein zweites Absperrventil (28), das entlang der Zuführungsleitung (23) stromabwärts der zweiten Mischvorrichtung (26) angeordnet ist.

10. Kombiniertes System (1) nach einem der Ansprüche 1 bis 9 und umfassend:
einen Drucksensor (35) zur Messung des Drucks im ersten Abscheider (21);
ein Regelventil (34), das entlang der Rückgewinnungsleitung (22) angeordnet ist; und
eine dritte Steuereinheit, die so konfiguriert ist, dass sie das Regelventil (34) nach dem durch den Drucksensor (35) gemessenen Druck ansteuert, und zwar so, dass der durch den Drucksensor (35) gemessene Druck immer gleich einem gewünschten Wert ist.

11. Kombiniertes System (1) nach einem der Ansprüche 1 bis 10 und umfassend einen Speicherbehälter (25), in dem durch Elektrolyse produzierter reiner Sauerstoff gespeichert wird, der dazu bestimmt ist, die von der Rückführungsleitung (10) zurückgeführten Abgase wieder mit Sauerstoff zu versorgen, und von dem die Zuführungsleitung (23) ausgeht.

12. Kombiniertes System (1) nach einem der Ansprüche 1 bis 11, wobei die Wärmekraftmaschine (5) eine Turbinenmaschine ist.

13. Kombiniertes System (1) nach einem der Ansprüche 1 bis 11, wobei die Wärmekraftmaschine (5) ein Hubkolbenmotor ist, der nach dem Dieselzyklus arbeitet.

## Revendications

1. Système combiné (1) de production d'hydrogène, d'oxygène et de dioxyde de carbone séparé et séquestré ; le système combiné (1) comprend :
une installation d'électrolyse (2) configurée pour recevoir de l'eau et de l'énergie électrique (E₁, E₂) en entrée et fournir de l'hydrogène et de l'oxygène sous forme gazeuse en sortie ;
une centrale de production d'électricité (4) étant équipée d'un générateur électrique (6) qui produit au moins une partie de l'énergie électrique (E₂) utilisée par l'installation d'électrolyse (2) et un moteur thermique (5) qui entraîne le générateur électrique (6) et comprend : un conduit d'admission (8) ; un conduit d'échappement (9) ; et un conduit de recirculation (10) reliant le conduit d'échappement (9) au conduit d'admission (8) pour faire recirculer les gaz d'échappement produits par la combustion ;
un conduit d'alimentation (23) qui envoie l'oxygène généré par l'installation d'électrolyse (2) vers le conduit d'admission (8) du moteur thermique (5) ; et
un conduit d'extraction (14) configuré pour aspirer une partie des gaz d'échappement du conduit d'échappement (9) du moteur thermique (5) en les retirant du conduit de recirculation (10) ;
le système combiné (1) est **caractérisé par le fait qu'il** comprend :
un premier échangeur de chaleur (20) étant disposé le long du conduit d'extraction (14) et configuré pour refroidir les gaz d'échappement à une température inférieure au point de rosée du mélange gazeux afin de condenser le dioxyde de carbone ;
un premier séparateur (21) étant disposé le long du conduit d'extraction (14) en aval du premier échangeur de chaleur (20) et configuré pour séparer le dioxyde de carbone liquéfié des gaz non condensables dans les gaz d'échappement ; et
un conduit de récupération (22) reliant le premier séparateur au conduit d'alimentation (23) afin d'introduire dans le conduit d'alimentation (23) les gaz non condensables présents dans les gaz d'échappement et extraits du premier séparateur (21).

2. Système combiné (1) selon la revendication 1 et comprenant un premier dispositif de mélange (24) d'où part le conduit d'admission (8) et configuré pour mélanger l'oxygène acheminé par le conduit d'alimentation (23) avec les gaz d'échappement acheminés par le conduit de recirculation (10).

3. Système combiné (1) selon la revendication 2 et comprenant :
une vanne de réglage (29) située le long du conduit d'alimentation (23) et en amont du premier dispositif de mélange (24) ;
un capteur de mesure (31) de la concentration en oxygène couplé au dispositif de mélange (24) ; et
une première unité de commande (30) qui commande la vanne de réglage (29) selon le signal fourni par le capteur de mesure (31).

4. Système combiné (1) selon l'une quelconque des revendications 1 à 3 et comprenant :
un second échangeur de chaleur (11) étant disposé le long du conduit d'échappement (9) et configuré pour refroidir les gaz d'échappement à une température suffisamment basse pour condenser l'eau produite par la combustion ; et
un second séparateur (12) étant disposé le long du conduit d'échappement (9) en aval du second échangeur de chaleur (11), et configuré pour séparer l'eau condensée dans le second échangeur de chaleur (11) des gaz d'échappement.

5. Système combiné (1) selon la revendication 4, le conduit d'extraction (14) partant du second séparateur (12).

6. Système combiné (1) selon la revendication 4 ou 5 et comprenant un compresseur (17) étant disposé le long du conduit d'extraction (14) et configuré pour comprimer les gaz d'échappement circulant le long du conduit d'extraction (14).

7. Système combiné (1) selon la revendication 6 et comprenant :
un capteur de pression configuré pour mesurer une pression dans le second séparateur (12) ; et
une deuxième unité de commande configurée pour réguler un débit du compresseur (17) selon la pression mesurée dans le second séparateur (12) et de manière à ce que la pression mesurée dans le second séparateur (12) soit toujours égale à une valeur souhaitée.

8. Système combiné (1) selon l'une quelconque des revendications 1 à 7 et comprenant un second dispositif de mélange (26) étant disposé le long du conduit d'alimentation (23) et configuré pour mélanger l'oxygène pur provenant de l'installation d'électrolyse (2) avec les gaz non condensables acheminés par le conduit de récupération (22).

9. Système combiné (1) selon la revendication 8 et comprenant :
une première soupape d'isolement (27) pour l'oxygène pur, étant située le long du conduit d'alimentation (23) en amont du second dispositif de mélange (26) ; et
une seconde soupape d'isolement (28) étant située le long du conduit d'alimentation (23) en aval du second dispositif de mélange (26).

10. Système combiné (1) selon l'une quelconque des revendications 1 à 9 et comprenant :
un capteur de pression (35) servant à mesurer la pression dans le premier séparateur (21) ;
une vanne de réglage (34) située le long du conduit de récupération (22) ; et
une troisième unité de commande configurée pour piloter la vanne de réglage (34) selon la pression mesurée par le capteur de pression (35) et de manière à ce que la pression mesurée par le capteur de pression (35) soit toujours égale à une valeur souhaitée.

11. Système combiné (1) selon l'une quelconque des revendications 1 à 10 et comprenant un réservoir de stockage (25) dans lequel est stocké l'oxygène pur produit par électrolyse et destiné à réoxygéner les gaz d'échappement recirculés par le conduit de recirculation (10) et d'où part le conduit d'alimentation (23).

12. Système combiné (1) selon l'une quelconque des revendications 1 à 11, le moteur thermique (5) étant un moteur à turbine.

13. Système combiné (1) selon l'une quelconque des revendications 1 à 11, le moteur thermique (5) étant un moteur à piston alternatif fonctionnant selon le cycle Diesel.
